# EUROPEAN PATENT APPLICATION

(11) **EP 4 098 614 A1**
(43) Date of publication of application: **07.12.2022**
(21) Application number: 20916875.6
(22) Date of filing: 17.12.2020
(51) Int. Cl.: C01B 33/02, C01B 33/32, H01M 4/134, H01M 4/36, H01M 4/38

(54) **NEGATIVE ELECTRODE ACTIVE SUBSTANCE FOR SECONDARY BATTERY, METHOD FOR PRODUCING SAME, AND SECONDARY BATTERY**

(30) Priority: 31.01.2020 JP 2020015895
(71) Applicant: Panasonic Intellectual Property Management Co., Ltd., Osaka-shi, Osaka 540-6207 (JP)
(72) Inventor: OKAZAKI, Keita, Chuo-ku, Osaka-shi, Osaka 540-6207 (JP); SEKI, Naoki, Chuo-ku, Osaka-shi, Osaka 540-6207 (JP)
(74) Representative: Novagraaf International SA
(86) International application number: PCT/JP2020/047196
(87) International publication number: WO 2021/153077

(57) **Abstract**

A negative electrode active material for a secondary battery comprising silicate composite particles including silicon particles and a lithium silicate phase. The silicon particles are dispersed in the lithium silicate phase, the silicate composite particles have a porosity of 2% or less. In a diffraction pattern by X-ray diffraction (XRD), a ratio I₂/I₁ is 0.3 or less, the ratio I₂/I₁ being a ratio of an integrated intensity I₂ of a peak derived from the lithium silicate phase that appears in a range of 2θ of 23° to 25°relative to an integrated intensity I₁ of a peak derived from Si(111) plane of the silicon particles that appears in a range of 2Θ of 27° to 30°.

## Description

### [Technical Field]

The present disclosure primarily relates to an improvement in a negative electrode active material for secondary batteries.

### [Background Art]

Recently, secondary batteries such as nonaqueous electrolyte secondary batteries are expected as a power source for small consumer applications, power storage devices, and electric vehicles, because of their high voltage and high energy density. With a demand for high energy density in batteries, as a negative electrode active material having a high theoretical capacity density, use of a material containing silicon capable of being alloyed with lithium is expected.

However, since the material containing silicon has a large irreversible capacity, there is a problem in that the initial charge/discharge efficiency (in particular, the ratio of the initial discharge capacity to the initial charge capacity) is low. Therefore, various techniques have been proposed in which lithium corresponding to the irreversible capacity is introduced into a material containing silicon in advance. Specifically, it has been proposed to use a composite particle containing a lithium silicate phase and silicon particles dispersed in the lithium silicate phase (Patent Literature 1). Silicon particles contribute to the charge-discharge reaction (reversible lithium storage and release).

The composite particles are produced, for example, by sintering a mixture of a glassy lithium silicate powder and silicon particles at a high temperature and high pressure atmosphere.

### [Citation List]

### [Patent Literature]

Patent Literature 1: Japanese Laid-Open Patent Publication No. 2015-153520

### [Summary of Invention]

It is known that the above composite particles have a large degree of expansion and contraction of silicon particles accompanied by storage and release of lithium during charging and discharging. As a result, expansions and contractions of the silicon particles cause the lithium silicate phase existing around the silicon particles to be highly stressed, thereby induce cracking or splitting of the composite particles. Along with this, the bonding force between the composite particle and the binder around is weakened, and particularly the cracked composite particle is isolated by losing the conductive path with the periphery particles. Further, side reactions between the electrolyte solution and silicon particles are promoted. As a result, the charge/discharge cycle characteristics are lowered.

In view of the above, an aspect of the present disclosure relates to a negative electrode active material for a secondary battery including silicate composite particles including silicon particles and a lithium silicate phase, wherein the silicon particles are dispersed in the lithium silicate phase, the silicate composite particles have a porosity of 2% or less, in a diffraction pattern by X-ray diffraction (XRD), a ratio I₂/I₁ is 0.3 or less, the ratio I₂/I₁ being a ratio of an integrated intensity I₂ of a peak derived from the lithium silicate phase that appears in a range of 2θ of 23° to 25° relative to an integrated intensity I₁ of a peak derived from Si(111) plane of the silicon particles that appears in a range of 2θ of 27° to 30°.

Another aspect of the present disclosure relates to a secondary battery including a positive electrode, a negative electrode, an electrolyte, and a separator interposed between the positive electrode and the negative electrode, wherein the negative electrode includes a current collector and a negative electrode active material layer, and the negative electrode active material layer includes the negative electrode active material for the secondary battery described above.

Yet another aspect of the present disclosure relates to a method for producing a negative electrode active material for a secondary battery, including: preparing silicate composite particles including silicon particles and a noncrystalline lithium silicate phase wherein the silicon particles are dispersed in the lithium silicate phase, molding a powder of the silicate composite particles, placing the molded silicate composite particles to be in a heated state at 600°C or more and 1000°C or less, for 40 seconds or more and 200 seconds or less, and pressing the silicate composite particles in the heated state.

By using the negative electrode active material of the present disclosure, a negative electrode for a secondary battery and a secondary battery having excellent charge/discharge cycle characteristics can be produced.

### [Brief Description of Drawings]

[FIG. 1] FIG. 1 is a cross sectional view schematically showing a negative electrode active material (LSX particles) for a secondary battery according to an embodiment of the present disclosure.
[FIG. 2] FIG. 2 is a schematic partially cutaway oblique view of a secondary battery in an embodiment of the present disclosure.
[FIG. 3] FIG. 3 is a schematic diagram showing a schematic configuration of a device used for manufacturing a negative electrode active material for a secondary battery of an embodiment of the present disclosure.
[FIG. 4] FIG. 4 is an illustration of an exemplary XRD diffraction pattern of LSX particles.

### [Description of Embodiments]

A negative electrode active material for a secondary battery according to an embodiment of the present disclosure includes silicate composite particles (hereinafter, also referred to as LSX particles) containing silicon particles; and a lithium silicate phase containing an Li element, an O element, and an Si element. The porosity of the silicate composite particles is 2% or less.

The LSX particles have a sea-island structure in which the silicon particles as island-portions are dispersed in the lithium silicate phase as a sea-portion. The capacity can be increased by controlling the amount of the silicon particles dispersed in the lithium silicate phase, and since the silicon particles are dispersed in the lithium silicate phase, the stress accompanying expansion and contraction of the silicon particles during charging and discharging is alleviated by the lithium silicate phase, and expansion and contraction of the LSX particles can be reduced. Therefore, cracking and splitting of the LSX particles can be reduced, enabling both a higher capacity and improved cycle characteristics in batteries to be easily achieved.

Conventionally, composite particles have been produced by mixing a lithium silicate powder and silicon particles, forming a composite by grinding the mixture with a ball mill or the like, and sintering the mixture after grinding in a high temperature and high pressure atmosphere. As the lithium silicate powder, a noncrystalline one may be used, or one having crystallinity may be used. However, even when the crystalline lithium silicate powder is used, the crystalline lithium silicate may be changed to be noncrystalline due to the addition of shearing force due to stirring of the mixture. Sintering at high temperatures restores the crystallinity of the lithium silicate, resulting in composite particles in which silicon particles are dispersed in the crystalline lithium silicate phase.

However, a highly crystalline lithium silicate phase causes cracking due to expansion and contraction of the LSX particles during charging and discharging. When cracking occurs, side reactions with the electrolyte solution may increase due to generation of a new surface. In addition, silicon particles may become isolated due to cracking and may not contribute to charge/discharge. As a result, charge/discharge cycle characteristics may be lowered. In view of this, crystallinity of the lithium silicate phase should be lower, and lithium silicate phase may be noncrystalline.

For example, in the above-described conventional method, if the sintering step of the mixture after forming a composite by grinding is omitted, LSX particles in which silicon particles are dispersed in a lithium silicate phase having a low crystallinity (noncrystalline) can be obtained. In this instance, expansion and contraction of the LSX particles are suppressed by the fact that the lithium silicate phase is noncrystalline. However, if the sintering is insufficient, although crystallinity of the lithium silicate phase can be lowered, the porosity inside the LSX particles tends to be high. Consequently, the surface area reacting with the electrolyte solution increases, and side reaction tends to increase. As a result, it may be difficult to obtain lower charge/discharge cycle characteristics.

On the other hand, in this embodiment, by performing heat treatment at, for example, a high temperature (e.g., 600°C or more and 1000°C or less) for a relatively short period of time (e.g., 40 seconds or more and 200 seconds or less) and pressing the heated mixture, a sintered product having a small porosity and a high hardness can be obtained while suppressing crystallization of the lithium silicate phase. In this manner, cracking and splitting of the LSX particles due to charge/discharge are suppressed. The porosity of the LSX particles is 2% or less, and the surface area of the LSX particles is also suppressed. Therefore, side reactions do not increase, and the deterioration of cycle characteristics is suppressed. The pressure treatment may be performed at the same time as the heat treatment, or may be performed after the heat treatment with the high temperature maintained.

The porosity (%) of the LSX particles may be 1.7% or less, or 0.6% or less. Here, porosity means the ratio of the area occupied by the voids to the total area of the mother particles in cross sections of the particles, and can be determined by SEM-observation of the particle cross sections. A specific measuring method of the porosity is as follows.
(1) The cross sections of the mother particles are exposed using an ion milling device (ex. IM4000) manufactured by Hitachi High-Tech Corporation.
(2) The exposed particle cross sections are observed by SEM, the ratio of area of the voids to the total area of particle cross sections is measured, and the porosity ((area of the voids)×100_{/}(total area of particle cross sections)) is calculated. The porosity is the average for 10 particles.

The BET specific surface area of the LSX particles is, for example, 0.8 m²/g or less. A smaller BET specific surface area allows for less side reactions. The BET specific surface area is measured on the basis of the BET method for the LSX particles that are separated from the negative electrode active material layer, after taking out the negative electrode from a battery in a discharged state by a method described later. In the BET method, an inert gas having a known molecule size is adsorbed to a surface of a measurement sample, and the surface area is determined from the amount adsorbed and the area occupied by the inert gas. For the inert gas, nitrogen gas is used.

The Vickers hardness of the LSX particles is, for example, 800 HV or more. The larger the Vickers hardness, the higher the hardness, and the less cracking and splitting of the LSX particles associated with charge/discharge. The Vickers hardness is calculated by preparing a sample obtained by embedding the LSX particles separated from the negative electrode active material layer with the method described later in resin, and then polishing it, and calculating from the test force and the depth of indentation at the time of pressing with an indenter of a triangular pyramid.

In these LSX particles, the charge capacity in the initial charge/discharge tends to increase by including the noncrystalline lithium silicate phase more. Furthermore, since the noncrystalline lithium silicate phase is highly flexible, it is easy to follow expansion and contraction of silicon, and the frequency at which silicon particles are isolated and charge/discharge cannot be performed is reduced. As a result, the decrease in capacity in the charge/discharge cycle after the first time is remarkably suppressed. Therefore, the LSX particles of the present embodiment are advantageous in consideration of a large number of charge and discharge cycles.

The LSX particles may also include a crystalline silicon oxide phase. The LSX particles are produced by grinding and forming a composite of silicon and lithium silicate. At this time, in the manufacturing process of lithium silicate, if the silicon raw material is excessive with respect to the lithium raw material, silicon oxide may be generated. Although silicon oxide largely becomes noncrystalline in the grinding process, a crystal silicon oxide can be finely precipitated into the lithium silicate phase in the following heating process. Crystalline silicon oxide is stable and does not cause irreversible reactions by reacting with lithium ions during charging, and is fine so that expansion and contraction of silicon particles are hardly hindered.

On the other hand, if many crystals of lithium silicate such as Li₂Si₂O₅ are contained, the LSX particles tend to cause cracking of the particles due to expansion and contraction. In addition, the lithium silicate phase tends to follow the expansion and contraction of the silicon particles because noncrystalline substances are more flexible than crystal substances. Therefore, by interposing two phases of the crystal silicon oxide phase and the noncrystalline lithium silicate phase, stresses associated with expansion and contraction of the silicon particles can be further relaxed. Thus, a negative electrode active material having good cycle characteristics and a small irreversible capacity can be realized.

The silicon oxide phase may be present by being dispersed in the lithium silicate phase in the LSX particles. That is, in the noncrystalline lithium silicate phase, a silicon oxide phase and silicon particles may be present independently in a dispersed manner.

In a diffraction pattern by X-ray diffraction (XRD) of the LSX particles of one embodiment, a peak derived from the silicon particles and lithium silicate phase may appear. However, since it contains a large amount of the noncrystalline lithium silicate phase, a peak strength derived from the lithium silicate phase is smaller than that of the conventional one. To be specific, in a range of 2θ of 27°to 30°, a peak (peak position) derived from the Si(111) plane of the silicon particles can appear. In a range of 2θ of 23°to 25°, a peak (peak position) derived from the lithium silicate phase (Li₂Si₂O₅) can appear. After separating the peak derived from the Si(111) plane of the silicon particles from the XRD diffraction pattern, the integrated intensity of the separated peak obtained by integrating in a range of 2θ of 23°to 30° is regarded as I₁. Similarly, after separating the peak derived from the lithium silicate phase from the XRD diffraction pattern, the integrated intensity of the separated peak obtained by integrating in the range of 2θ of 23°to 30° is regarded as I₂. If a plurality of peaks exist in the range, the sum of the integrated intensity of each peak is calculated. I₂/I₁ is 0.3 or less. I₂/I₁ may be 0.2 or less, or 0.1 or less. For the X-rays used in the XRD method, Kα radiation of Cu is used.

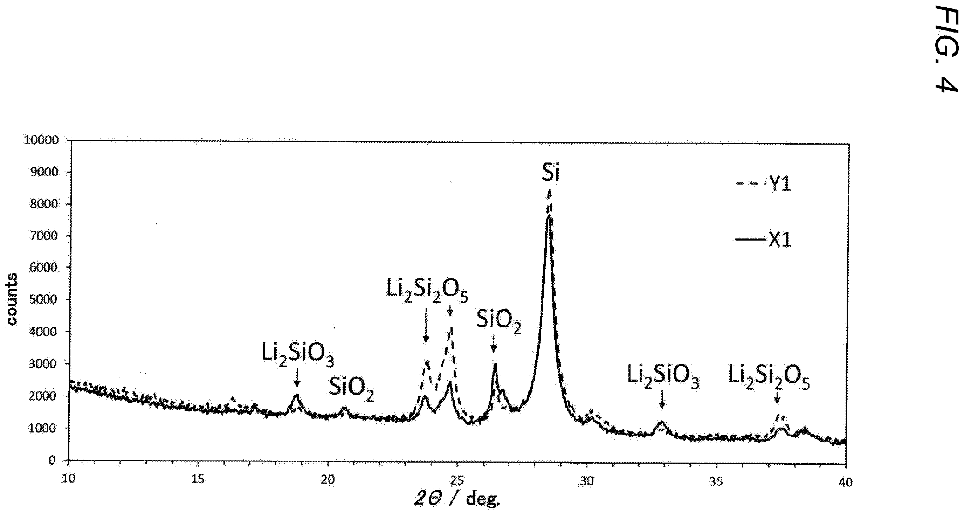

FIG. 4 shows example XRD diffraction patterns of the LSX particles of this embodiment and conventional LSX particles. The diffraction pattern of LSX particles X1 indicated by the solid line in FIG. 4 relates to the LSX particles of this embodiment, and the diffraction pattern of LSX particles Y1 indicated by the broken line relates to the LSX particles of the prior art.

In each of the LSX particles X1 and Y1, the peak position of the peak derived from the Si(111) plane of the silicon particles exists in the vicinity of 2θ=28°. In the range of 2θ of 23°to 25°, there are a plurality of peak positions derived from the lithium silicate phase (Li₂Si₂O₅). In addition, peaks derived from the SiO₂ (011) plane of the silicon oxide phase are observed near 2θ=26°. Further, in the vicinity of 2θ=19°, a peak derived from the lithium silicate Li₂SiO₃ is observed, and in a range of 2θ of 20°to 21°, a peak derived from SiO₂ is observed.

However, when comparing the LSX particles X1 with Y1, the integrated intensity I₂ of the peak derived from the lithium silicate phase in the LSX particles X1 is smaller than that of LSX particles Y1.

In the LSX particles, the lithium silicate phase includes an oxide phase represented by, for example, formula: Li_{2z}SiO_{2+z} (0 < z < 1). In view of stability, ease of manufacture, lithium ion conductivity, etc., z = 1/2 is preferable.

The lithium silicate phase may contain elements other than Li, Si, and O (oxygen). The lithium silicate phase may contain, for example, at least one selected from the group consisting of alkali metal elements (except Li) and Group II elements.

Inclusion of an alkali metal element other than Li in the lithium silicate phase makes it difficult to crystallize, lowers viscosity in the softened state, and increases flowability. Therefore, even in the heat treatment at a low temperature, the gaps between silicon particles are easily filled, and dense composite particles are easily generated. The alkali metal element may be Na and/or K because it is inexpensive. The atomic ratio X/Li of the alkaline element X (e.g., K) other than Li contained in the lithium silicate phase to Li may be, for example, 0.1 to 7.1, 0.4 or more and 5 or less, or 0.7 or more and 2 or less.

The lithium silicate phase may include a Group II element. Generally, the silicate phase exhibits alkaline properties, but Group II elements work to suppress elution of alkali metals from the silicate phase. Therefore, when a slurry containing a negative electrode active material is prepared, the slurry viscosity tends to be stabilized. Therefore, the need for a process (e.g., acid treatment) for neutralizing the alkali component of the LSX particles is also reduced.

As the Group II element, at least one selected from the group consisting of Be, Mg, Ca, Sr, Ba, and Ra can be used. Among these, Ca is preferable in that Ca can improve Vickers hardness of the lithium silicate phase and further improve cycle characteristics. The content of the Group II element is, for example, 20 mol% or less, may be 15 mol% or less, or may be 10 mol% or less, based on the total amount of elements other than O contained in the lithium silicate phase.

The lithium silicate phase may contain an element M other than the alkali metal element and the Group II element. The element M is at least one selected from the group consisting of B, Al, Zr, Nb, Ta, La, V, Y, Ti, P, Bi, Zn, Sn, Pb, Sb, Co, Er, F, and W. In particular, for example, B has a low melting point and is beneficial for improving flowability in sintering. Although Ca reduces ion conductivity, it has an action of increasing the hardness of the lithium silicate phase. Al, Zr, Nb, Ta, and La may improve hardness while retaining ion conductivity. The content of the element M is, for example, 10 mol% or less relative to the total amount of elements other than O contained in the lithium silicate phase, or may be 5 mol% or less.

The content of B, Na, K, and Al contained in the lithium silicate phase is determined by quantitative analysis according to JIS R3105 (1995) (Methods for chemical analysis of borosilicate glasses), whereas the Ca content is determined by quantitative analysis according to JIS R3101 (1995) (Methods for chemical analysis of Soda-Lime-Magnesia-Silica glasses).

The remaining elements contained are determined by the method below. First, a sample of the lithium silicate phase or LSX particles containing the same is completely dissolved in a heated acid solution (mixed acid of hydrofluoric acid, nitric acid, and sulfuric acid), and the carbon of the solution residue is filtered and removed. Afterwards, the resulting filtrate is analyzed by inductively coupled plasma-atomic emission spectrometry (ICP-AES) to determine the spectral intensities of the respective elements. Subsequently, a calibration curve is prepared using standard solutions of commercially available elements, and the content of each element contained in the lithium silicate phase is calculated.

In the silicate composite particles, a lithium silicate phase, a silicon oxide phase, and silicon particles are present, and these can be distinguished and quantified by using a Si-NMR. The Si content obtained by ICP-AES as described above is the sum of the amount of Si constituting the silicon particles, the amount of Si in the lithium silicate phase, and the amount of Si in the silicon oxide phase. On the other hand, the amount of Si constituting the silicon particles can be separately quantified using a Si-NMR. Therefore, by subtracting the amount of Si constituting the silicon particles and the amount of Si in the silicon oxide phase from the Si content obtained by ICP-AES, the amount of Si in the lithium silicate phase can be quantified. A mixture containing a silicate phase with a known Si content and silicon particles at a predetermined ratio may be used for the standard substance required for quantitation.

Preferable Si-NMR measurement conditions are shown below.

### <Si-NMR Measurement conditions>

Measuring equipment: Solid-state nuclear magnetic resonance spectrometer (INOVA 400) manufactured by Varian Medical Systems
Probe: Varian 7 mm CPMAS-2
MAS: 4.2 kHz
MAS speed: 4 kHz
Pulse: DD (45° pulse + signal uptake time 1H decoupled)
Repetition time: 1200 sec to 3000 sec
Observation width: 100 kHz
Observation center: near -100 ppm
Signal uptake time: 0.05 sec
Total number of times: 560
Sample volume: 207.6 mg

In order to increase the capacity and improve cycle characteristics, the content of the silicon particles in the LSX particles may be, for example, 30 mass% or more, and 80 mass% or less. By setting the content of the silicon particles to 30 mass% or more, the ratio of the lithium silicate phase is reduced, and the initial charge/discharge efficiency is easily improved. By setting the content of the silicon particles to 80 mass% or less, the degree of expansion and contraction of the LSX particles during charging and discharging can be easily reduced. Preferably, the content of the silicon particles in the LSX particles is 40 mass% or more, more preferably 50 mass% or more.

The silicon particles dispersed in the lithium silicate phase have a particulate phase of elemental silicon (Si) and are composed of a single or a plurality of crystallites. Preferably, the crystallite size of the silicon particles is 30 nm or less. When the crystallite size of the silicon particles is 30 nm or less, the volume change due to expansion and contraction of the silicon particles during charging and discharging can be reduced, and cycle characteristics can be further enhanced. In particular, the isolation of the silicon particles is suppressed, and decrease in charge/discharge efficiencies due to the isolation of the particles is suppressed: the isolation due to voids formed around the silicon particles from contraction of the silicon particles, resulting in reduced contact points with the periphery of the particles. The lower limit of the crystallite size of the silicon particles is not particularly limited, but is, for example, 5 nm.

The crystallite size of the silicon particles is more preferably 2 nm or more and 30 nm or less, and more preferably 2 nm or more and 20 nm or less. When the crystallite size of silicon particles is 20 nm or less, the expansion and contraction of the silicon particles can be made uniform, and cycle characteristics can be improved by reducing the fine cracks of the particles due to the expansion and contraction of the silicon particles during charge and discharge. The crystallite size of the silicon particles is calculated by the Sheller's equation from the half-width of the diffraction peak assigned to the Si (111) plane of the X-ray diffraction (XRD) pattern of the silicon particles.

At least a portion of the surface of the LSX particles may be coated with a conductive material. Since the lithium silicate phase has poor electronic conductivity, the conductivity of the LSX particles tends to be low. However, by coating the surface of the mother particles with a conductive material to form a conductive layer, electrical conductivity of the LSX particles can be dramatically increased. The carbon material is a preferable conductive material. Preferably, the carbon material includes at least one selected from the group consisting of a carbon compound and a carbonaceous substance.

Preferably, the thickness of the conductive layer is substantially thin so that it does not affect the average particle size of the LSX particles. The thickness of the conductive layer is preferably 1 to 200 nm, and more preferably 5 to 100 nm considering securement of conductivity and diffusivity of lithium ions. The thickness of the conductive layer can be measured by cross sectional observation of the LSX particles using SEM or TEM (transmission electron microscope).

Examples of the carbon compound include a compound containing, for example, carbon and hydrogen, and a compound containing carbon, hydrogen, and oxygen. As the carbonaceous substance, amorphous carbon having low crystallinity, graphite having high crystallinity, or the like can be used. Examples of the amorphous carbon include carbon black, coal, coke, charcoal, and activated carbon. Examples of the graphite include natural graphite, artificial graphite, graphitized mesophase carbon particles, and the like. Among them, amorphous carbons are preferable because of their low hardness and their large buffering effects on silicon particles, which change volume by charging and discharging. The amorphous carbon may be soft carbon or hard carbon. Examples of the carbon black include acetylene black and Ketjen black.

The LSX particles can be removed from batteries by the following technique. First, the battery is disassembled to take out the negative electrode, and the negative electrode is washed with anhydrous ethyl methyl carbonate or dimethyl carbonate to remove the electrolyte solution. Next, the negative electrode mixture is peeled off from the copper foil and ground in a mortar to obtain a sample powder. Next, the sample powder is dried in a dry atmosphere for 1 hour and immersed in a weakly boiled 6M hydrochloric acid for 10 minutes to remove alkali metals such as Na and Li which can be contained in a binder or the like. Next, the sample powder is washed with ion-exchanged water, filtered off, and dried at 200°C for 1 hour. Afterwards, in an oxygen atmosphere, only the LSX particles can be isolated by heating to 900°C to remove the carbon components.

The cross section of the LSX particles can be observed by, for example, the method below. First, the battery is disassembled, and the negative electrode is taken out. A cross section polisher (CP) is used to obtain a cross section of the negative electrode mixture layer. A scanning electron microscopy (SEM) is used to observe the cross section of the negative electrode mixture layer. From the cross sectional image of the reflected electron image of the negative electrode mixture layer, 10 LSX particles having the largest diameter of 5 µm or more are randomly selected, and the respective LSX particles are analyzed by element mapping (e.g., carbon) by energy-dispersive X-ray (EDX). The area where the target element is contained is calculated using an image analysis software. The observation magnification is desirably 2000 to 20000. The area where the predetermined element is contained is measured from 10 particles, and the measured values are averaged.

In the course of charge/discharge, a coating is formed on the surfaces of the LSX particles by decomposition of electrolytes or the like. As described later, the LSX particles may further include a conductive layer covering the surface of the composite particles. Therefore, mapping analysis by EDX is performed for the range inner from the peripheral edge of the cross section of the LSX particles by 1 µm, so that the measuring range does not include a thin coating or the conductive layer. The state of the distribution of the carbon material in the LSX particles can also be confirmed by the mapping analysis by EDX. Preferably, samples prior to or early in the cycle are subjected to measurements because it is difficult to distinguish from decomposed products of electrolytes at the terminal period of the cycle.

Preferable cross sectional SEM-EDX analysis conditions are shown below.

### <SEM-EDX Measurement conditions>

Processing Equipment: manufactured by JEOL, SM-09010(Cross Section Polisher)
Processing conditions: Acceleration voltage 6kV
Current value: 140 µA
Vacuum degree: 1 × 10⁻³ to 2 × 10⁻³ Pa
Measuring device: electron microscopy manufactured by HITACHI, SU-70
Acceleration voltage at analysis: 10 kV
Field: Free mode
Probe Current Mode: Medium
Probe Current Range: High
Anode Ap.: 3
OBJ Ap.: 2
Analysis area: 1 µm square
Analysis Software: EDAX Genesis
CPS: 20500
Lsec: 50
Time constant: 3.2

Furthermore, in addition to SEM-EDX spectroscopy, Auger electron spectroscopy (AES), laser ablation ICP mass spectroscopy (LA-ICP-MS), X-ray photoelectron spectroscopy (XPS), and the like can be used to quantify the elements in the silicate composite particles contained in the negative electrode active material layer in discharged state.

Next, an exemplary method for producing the LSX particles will be described in detail.

### Step (i)

As a raw material of lithium silicate, a raw material mixture containing a raw material containing Si and a Li raw material at a predetermined ratio is used. The raw material mixture may contain an alkali metal element, a Group II element, and/or an element M described above. A mixture obtained by mixing a predetermined amount of the above raw material is dissolved, and the melt is flaked through a metal roll to prepare a lithium silicate. Thereafter, the flaked silicate is crystallized by heat treatment at a temperature of a glass transition point or more and the melting point or less in an air atmosphere. The flaked silicate can also be used without crystallization. The silicates can also be produced by solid phase reaction, by baking at a temperature of the melting point or less without dissolving the mixture mixed in a predetermined amount.

For the Si raw material, silicon oxide can be used. As the Li raw material, for example, lithium carbonate, lithium oxide, lithium hydroxide, lithium hydride, or the like can be used. These may be used singly, or two or more kinds may be used in combination. Examples of the raw material of the alkali metal element, the Group II element, and the element M include an oxide, a hydroxide, a carbonic acid compound, a hydride, a nitrate, and a sulfate of each element.

In the lithium silicate, the Si raw material which has not reacted with the Li raw material may remain. The remaining Si raw material is dispersed in the lithium silicate as a silicon oxide phase.

### Step (ii)

Next, the raw material silicon is blended into the lithium silicate to make a composite. For example, composite particles are produced through steps (a) to (c) below.

### Step (a)

First, a powder of raw material silicon and a powder of lithium silicate are mixed at a mass ratio of, for example, 20:80 to 95:5. As the raw material silicon, coarse particles of silicon having an average particle size of about several µm to several tens of µm may be used.

### Step (b)

Next, using a grinding apparatus such as a ball mill, a mixture of raw material silicon and lithium silicate is ground while forming microparticles to make a composite. At this time, an organic solvent may be added to the mixture for wet-grinding. A predetermined amount of an organic solvent may be charged into the grinding vessel at a time at an initial stage of grinding, or a predetermined amount of an organic solvent may be intermittently charged into the grinding vessel dividedly a plurality of times in the grinding process. The organic solvent serves to prevent the object to be ground from adhering to the inner wall of the grinding vessel.

As the organic solvent, an alcohol, ether, fatty acid, alkane, cycloalkane, silicate ester, metal alkoxide, or the like can be used.

Each of the raw material silicon and lithium silicate may be separately converted into fine particles and then mixed. Also, silicon nanoparticles, and noncrystalline lithium silicate nanoparticles may be prepared and mixed without using a grinding apparatus. For producing the nanoparticles, a known method such as a gas phase method (e.g., a plasma method) or a liquid phase method (e.g., a liquid phase reduction method) may be used.

### Step (c)

The mixture is then pressed in the heated state at 600°C to 1000°C in, for example, an inert gas atmosphere (e.g., an atmosphere of argon or nitrogen) and sintered. The heating time may be short, for example, 200 seconds or less. The pressing may be performed at the same time (or in parallel) as heating, or may be performed after heating. The pressing may be performed within a period in which the high temperature state by heating is maintained. For the sintering, a sintering device that can perform pressing in an inert atmosphere, such as a hot press, may be used. Upon sintering, silicate softens and flows to fill the gaps between the silicon particles. As a result, a dense, block-like sintered product with the silicate phase as a sea-portion and the silicon particles as island-portions can be produced.

The resulting sintered product is ground to obtain silicate composite particles. By appropriately selecting grinding conditions, silicate composite particles with a predetermined average particle size can be produced.

The pressure treatment may be performed by rolling a powder of the mixture molded into a sheet in advance. Rolling is usually carried out by passing a sheet of the mixture through the gap between two rotating rolls. Heating and pressing of the mixture can be performed simultaneously by passing the sheet of the mixture through a gap of heated rolls. The sheet of the mixture may be heated prior to and/or after passing through rolls. By performing heat treatment while rolling the mixture molded into a sheet, a negative electrode active material for a secondary battery (LSX particles) can be continuously produced at a higher productivity. The pressing pressure applied by rolling is, for example, 200 MPa to 600 MPa.

### Step (iii)

At least a portion of the surface of the composite particles may then be coated with a conductive material to form a conductive layer. The conductive material is preferably electrochemically stable, and a conductive carbon material is preferable. As a manner of coating the surface of the composite particles with a conductive carbon material, a CVD method using a hydrocarbon gas such as acetylene or methane as a raw material, a method in which a coal pitch, a petroleum pitch, a phenol resin, or the like is mixed with composite particles and heated and carbonized can be exemplified. Further, carbon black may be adhered to the surface of the composite particles. The coating of the conductive carbon material can be performed by heating a mixture of the conductive carbon material and the composite particle from which the fine particles have been removed, for example, in an inert atmosphere (for example, an atmosphere of argon, nitrogen, or the like) at 700°C to 950°C.

### Step (iv)

A step of washing the composite particles (including those having a conductive layer on the surface), with an acid may be performed. For example, by washing the composite particles with an acidic aqueous solution, a trace amount of an alkali component present on the surface of the composite particles, which may be formed when the raw material silicon and the lithium silicate are made into a composite, can be dissolved and removed. As the acidic aqueous solution, an aqueous solution of an inorganic acid such as hydrochloric acid, hydrofluoric acid, sulfuric acid, nitric acid, phosphoric acid, or carbonic acid, or an aqueous solution of an organic acid such as citric acid or acetic acid can be used.

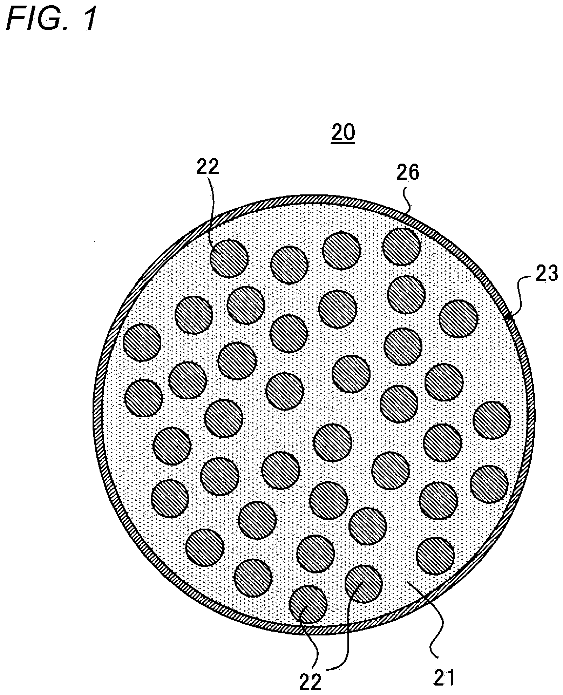

FIG. 1 schematically shows a cross section of a LSX particle 20 as an example of the negative electrode material.

A mother particle 23 includes a lithium silicate phase 21; and silicon particles 22 dispersed within the lithium silicate phase 21. The mother particle 23 has a sea-island structure in which fine silicon particles are dispersed in a matrix of the lithium silicate phase 21. The surface of the mother particle 23 is coated with a conductive layer 26 to form the LSX particle 20.

In the lithium silicate phase 21, a silicon oxide phase may also be dispersed. The SiO₂ content in the mother particle 23 measured by a Si-NMR is preferably, for example, 30 mass% or less, and more preferably less than 7 mass%.

The mother particle 23 may include components other than the lithium silicate phase 21, silicon particles 22, silicon oxide phase, and carbon materials. In view of improving strength of the mother particle 23, a reinforcing material such as oxide including ZrO₂, or carbide, may be included in the mother particle 23 up to less than 10 wt% relative to the mother particle 23.

The average particle size of the silicon particles 22 is 500 nm or less, preferably 200 nm or less, and more preferably 50 nm or less prior to initial charging. Such suitable micronizing of the silicon particles 22 reduces the change in volume during charging and discharging, thereby improving structural stability. In addition, the expansion and contraction of the silicon particles are made uniform, and cycle characteristics are improved by suppressing the cracking of the particles. The average particle size of the silicon particles 22 is measured by observing cross sections of the negative electrode material using SEM or TEM. Specifically, the maximum diameters of arbitrarily selected 100 silicon particles 22 are averaged.

The secondary battery according to the embodiment of the present disclosure includes a positive electrode, a negative electrode, an electrolyte, and a separator interposed between the positive electrode and the negative electrode. The negative electrode includes a current collector and a negative electrode active material layer including the negative electrode active material for a secondary battery described above. In the following, the negative electrode, positive electrode, electrolyte, and separator included in the secondary battery according to the embodiment of the present disclosure will be described.

### [Negative Electrode]

The negative electrode includes a negative electrode current collector and a negative electrode mixture layer formed on the negative electrode current collector surface and having a negative electrode active material. The negative electrode active material layer can be formed, for example, by applying a negative electrode slurry in which a negative electrode mixture is dispersed in a dispersion medium, on a surface of the negative electrode current collector, and drying the slurry. The dried coating film may be rolled, if necessary. The negative electrode mixture layer may be formed on one surface of the negative electrode current collector, or on both surfaces thereof.

The negative electrode mixture contains, as a negative electrode active material, a negative electrode active material for a secondary battery containing the LSX particles described above as an essential component, and as an optional component, a binder, a conductive agent, a thickener, and the like can be included. The silicon particles in the LSX particles can absorb many lithium ions, and therefore contribute to increase in the capacity of the negative electrode.

The negative electrode active material may further include other active material that electrochemically stores and releases lithium ions. As another active material, for example, a carbon-based active material is preferable. Since the volume of the LSX particles expands and contracts with charging and discharging, when the ratio thereof in the negative electrode active material increases, contact failure between the negative electrode active material and the negative electrode current collector tends to occur with charging and discharging. On the other hand, when the LSX particles and a carbon-based active material are used in combination, excellent cycle characteristics can be achieved while a high capacity of silicon particles is given to the negative electrode. The ratio of the LSX particles to the sum of LSX particles and carbon-based active material is, for example, preferably 0.5 to 15 mass%, and more preferably 1 to 5 mass%. This allows achievement in both higher capacity and improved cycle characteristics easily.

Examples of the carbon-based active material include graphite, soft carbon, hard carbon, and the like. Preferred among them is graphite, which is excellent in stability during charging and discharging and has small irreversible capacity. Graphite means a material having a graphite type crystal structure, and includes, for example, natural graphite, artificial graphite, graphitized mesophase carbon particles, and the like. A kind of carbon-based active material may be used singly, or two or more kinds may be used in combination.

As the negative electrode current collector, a non-porous conductive substrate (metal foil, etc.), a porous conductive substrate (mesh-body, net-body, punched sheet, etc.) is used. As the material of the negative electrode current collector, stainless steel, nickel, nickel alloy, copper, copper alloy, and the like can be exemplified. The thickness of the negative electrode current collector is not particularly limited, but in view of balance between strength and weight reduction of the negative electrode, 1 to 50 µm is preferable, and 5 to 20 µm is more preferable.

Examples of the binder include fluororesin, polyolefin resin, polyamide resin, polyimide resin, vinyl resin, styrene-butadiene copolymer rubber (SBR), polyacrylic acid, and derivatives thereof. These may be used singly or in combination of two or more. Examples of the conductive agent include carbon black, conductive fibers, fluorinated carbon, and organic conductive materials. These may be used singly or in combination of two or more. Examples of the thickeners include carboxymethyl cellulose (CMC) and polyvinyl alcohol. These may be used singly or in combination of two or more.

Examples of the dispersion medium include water, alcohol, ether, N-methyl-2-pyrrolidone (NMP), or a mixture solvent thereof.

### [Positive Electrode]

The positive electrode includes, for example, a positive electrode current collector, and a positive electrode mixture layer formed on the surface of the positive electrode current collector. The positive electrode mixture layer can be formed, for example, by applying a positive electrode slurry in which a positive electrode mixture is dispersed in a dispersion medium, on a surface of the positive electrode current collector, and drying the slurry. The dried coating film may be rolled, if necessary. The positive electrode mixture layer may be formed on one surface of the positive electrode current collector, or may be formed on both surfaces thereof.

The positive electrode mixture contains a positive electrode active material as an essential component, and may contain a binder, a conductive agent, and the like as an optional component.

As the positive electrode active material, a lithium composite metal oxide can be used. Examples of the lithium composite metal oxide include LiₐCoO₂, LiₐNiO₂, LiₐMnO₂, LiₐCO_{b}Ni_{1-b}O₂, LiₐCO_{b}M_{1-b}Oc, LiₐNi_{1-b}M_{b}O_{c}, LiaMn₂O₄, LiₐMn_{2-b}M_{b}O₄, LiMePO₄, and Li₂MePO₄F. Here, M is at least one selected from the group consisting of Na, Mg, Sc, Y, Mn, Fe, Co, Ni, Cu, Zn, Al, Cr, Pb, Sb, and B. Me includes at least a transition element (e.g., at least one element selected from the group consisting of Mn, Fe, Co, and Ni). Here, 0 ≤ a ≤ 1.2, 0 ≤ b ≤ 0.9, and 2.0 ≤ c ≤ 2.3. The value "a" indicating the molar ratio of lithium is a value immediately after the active material is produced, and is increased or decreased by charge/discharge.

As the binder and the conductive agent, those exemplified for the negative electrode can be used. As the conductive agent, graphite such as natural graphite or artificial graphite may be used.

The shape and thickness of the positive electrode current collector can be selected from the shapes and ranges according to the negative electrode current collector. Examples of the material of the positive electrode current collector may be, for example, stainless steel, aluminum, aluminum alloy, titanium, or the like.

### [Electrolyte]

The electrolyte includes a solvent and a lithium salt dissolved in the solvent. The concentration of the lithium salt in the electrolyte is, for example, 0.5 to 2 mol/L. The electrolyte may contain a known additive.

As the solvent, an aqueous solvent or a nonaqueous solvent is used. As the nonaqueous solvent, for example, cyclic carbonate, chain carbonate, cyclic carboxylate, or the like is used. Examples of the cyclic carbonate include propylene carbonate (PC) and ethylene carbonate (EC). Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). A kind of nonaqueous solvent may be used singly, or two or more kinds thereof may be used in combination.

As the lithium salt, a lithium salt of, for example, chlorine-containing acid (such as LiClO₄, LiAlCl₄, LiB₁₀Cl₁₀), a lithium salt of fluorine-containing acid (such as LiPF₆, LiBF₄, LiSbF₆, LiAsF₆, LiCF₃SO₃, LiCF₃CO₂), a lithium salt of fluorine-containing acid imide (such as LiN(CF₃SO₂)₂, LiN(CF₃SO₂)(C₄F₉SO₂), LiN(C₂F₅SO₂)₂, or the like), a lithium halide (LiCI, LiBr, Lil, or the like), or the like can be used. A kind of lithium salt may be used singly, or two or more kinds thereof may be used in combination.

### [Separator]

Usually, it is desirable to interpose a separator between the positive electrode and the negative electrode. The separator has excellent ion permeability and suitable mechanical strength and electrically insulating properties. The separator may be, for example, a microporous thin film, a woven fabric, or a nonwoven fabric. As a material of the separator, for example, a polyolefin such as polypropylene or polyethylene may be used.

The structure of the secondary battery can be, for example, a structure in which an electrode group formed by winding a positive electrode and a negative electrode with a separator interposed therebetween and an electrolyte are accommodated in an outer case. Alternatively, other forms of electrode group may be applied, such as a laminated electrode group formed by laminating the positive electrode and the negative electrode with a separator interposed therebetween, instead of the wound electrode group. The secondary batteries may be of any form, for example, a cylindrical type, prismatic type, coin type, button type, laminated type, etc.

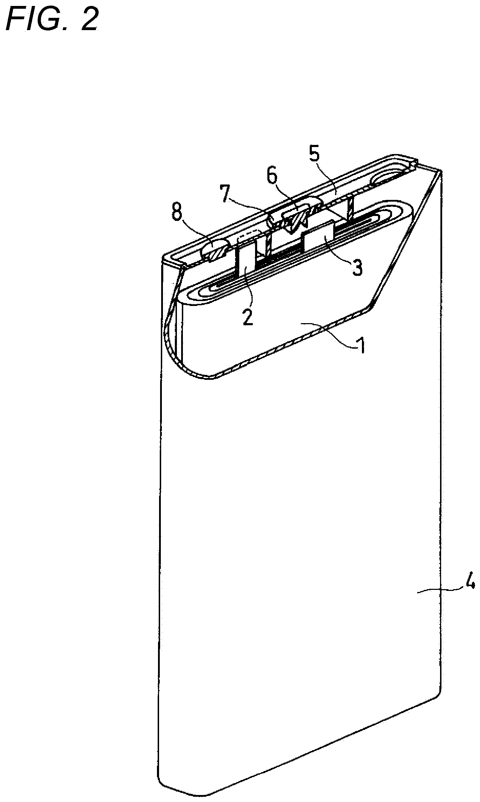

FIG. 2 is a schematic perspective partially cutaway view of a prismatic secondary battery according to an embodiment of the present disclosure.

The battery includes a bottomed prismatic battery case 4, an electrode group 1 and an electrolyte contained within the battery case 4, and a sealing plate 5 which seals the opening of the battery case 4. The electrode group 1 has a negative electrode in the form of a long strip, a positive electrode in the form of a long strip, and a separator interposed therebetween. The electrode group 1 is formed by winding the negative electrode, the positive electrode, and the separator around a flat core and removing the core. The sealing plate 5 has an injection port plugged with a sealing plug 8 and a negative electrode terminal 6 insulated from the sealing plate 5 with a gasket 7.

One end of the negative electrode lead 3 is attached to the negative electrode current collector of the negative electrode by welding, etc. One end of the positive electrode lead 2 is attached to the positive electrode current collector of the positive electrode by welding, etc. The other end of the negative electrode lead 3 is electrically connected to the negative electrode terminal 6. The other end of the positive electrode lead 2 is electrically connected to the sealing plate 5. At the upper part of the electrode group 1, a resin made frame is arranged to isolate the electrode group 1 from the sealing plate 5 and to isolate the negative electrode lead 3 from the battery case 4.

The method for producing a negative electrode active material for a secondary battery according to the embodiment of the present disclosure include, for example; preparing silicate composite particles including silicon particles and a noncrystalline lithium silicate phase, and in which the silicon particles are dispersed in the lithium silicate phase; molding a powder of the silicate composite particles by pressing; placing the molded silicate composite particles to be in a heated state at 600°C or more and 1000°C or less, for 40 seconds or more and 200 seconds or less; and pressing the silicate composite particles in the heated state. The step of pressing the silicate composite particles can be a step of rolling the silicate composite particles in a heated state. The above-mentioned steps (i) to (ii) (b) correspond to the steps of preparing the silicate composite particles.

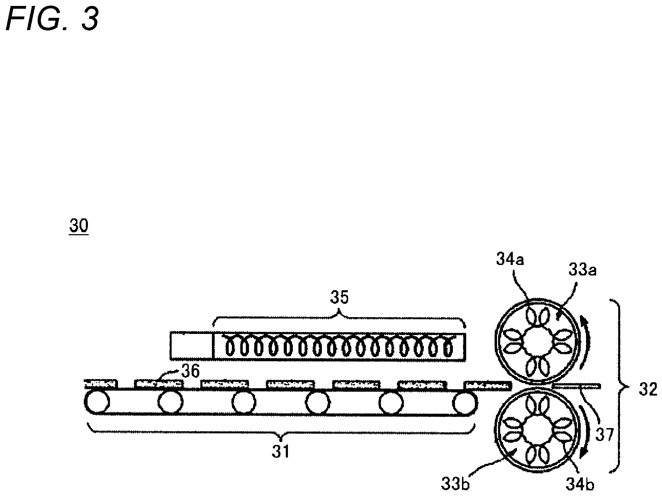

FIG. 3 is a schematic diagram showing a schematic configuration of a manufacturing device used for manufacturing the negative electrode active material for a secondary battery in an embodiment of the present disclosure. A manufacturing device 30 includes a conveyor 31, a presser 32, and an auxiliary heater 35.

The powder of the silicate composite particles (LSX particles) is premolded into, for example, a sheet. As the molding treatment, a method of compression molding a powder into a sheet using, for example, a pair of rolls, or a method of pressing using a mold can be used. The molded LSX particles are sent to the presser 32 via the conveyor 31.

The conveyor 31 functions to supply the molded LSX particles 36 to the presser 32. The conveyor 31 may be composed of, for example, a belt conveyor. Examples of the belt conveyor include steel belts, mesh belts, or the like.

The LSX particles 36 on the conveyor 31 are heated by the auxiliary heater 35 before being conveyed to the presser 32. During the heating, the temperature of the LSX particles may be maintained at 600°C or more and 1000°C or less. The heating time may be 40 seconds or more and 200 seconds or less. The heating time is the amount of time it takes for the LSX particles 36 to pass through the auxiliary heater 35.

The presser 32 includes a pair of rolls composed of an upper roll 33a and a lower roll 33b. The upper roll 33a and lower roll 33b include therein heaters 34a and 34b, respectively. For the configuration of the heaters 34a and 34b, a sheath heater, ceramic heater, halogen lamp heater, carbon heater, flush lamp heater, inductive heater, and the like can be used. The heaters 34a and 34b may be provided inside the upper roll 33a and lower roll 33b, and/or may be disposed on the outer peripheries of the upper roll 33a and lower roll 33b, respectively. The pressure at the time of pressing is, for example, 200 MPa or more and 600 MPa or less, or 300 MPa or more and 500 MPa or less. The LSX particles supplied from the conveyor 31 are pressed in the heated state by the presser 32, sintering proceeds, and a sintered product 37 is obtained.

<Examples>

In the following, the present disclosure will be described in detail based on Examples and Comparative Examples, but the present invention is not limited to Examples below.

### <Example 1>

### [Preparation of LSX Particles]

Lithium carbonate and silicon dioxide were mixed at a molar ratio of Li₂CO₃: SiO₂ = 34:66; the mixture was dissolved at 1500°C in an inert gas atmosphere for 5 hours; the melt was flaked through metal rollers; and a heat treatment at 750°C for 5 hours gave a lithium silicate composite oxide present as a mixed phase of noncrystalline and crystalline phases. The obtained lithium silicate composite oxide was ground so as to have an average particle size of 10 µm.

The lithium silicate composite oxide having an average particle size of 10 µm and a raw material silicon (3N, average particle size: 10 µm) were mixed at a mass ratio of 70:30. The mixture was put into a pot (made of SUS, volume: 500 mL) of a planetary ball mill (manufactured by Fritsch Co., Ltd., P-5), and 24 balls made of SUS (diameter: 20 mm) were placed in the pot. The lid was closed, and the mixture was subjected to grinding at 200 rpm for 25 hours in an inert atmosphere.

Thereafter, the ground product was press-molded into a sheet having a thickness of 4.2 mm at room temperature to obtain a molded sheet. The molded product was put into a device as shown in FIG. 3 to obtain a sintered product. Through the presser 32, a pressure of 400MPa was applied to the molded product. The heating temperature was 800°C. The conveyance speed was set so that heating time was 100 seconds.

Thereafter, the sintered product was ground and passed through a 40 µm mesh, and then mixed with coal pitch (MCP250, JFE Chemical Corporation), and the mixture was baked at 800° C for 5 hours in an inert gas atmosphere to cover the surfaces of the LSX particles with conductive carbon to form a conductive layer. The coating amount of the conductive layer was 5 mass% relative to the total mass of the LSX particles and the conductive layer. Afterwards, a sieve was used to obtain LSX particles with an average particle size of 5 µm with a conductive layer. For the LSX particles, XRD-analysis was performed and peaks derived from Si, SiO₂, Li₂Si₂O₅, and Li₂SiO₃ were measured.

### [Negative Electrode Production]

The LSX particles and graphite were mixed at a mass ratio of 5:95 and used as a negative electrode active material. The negative electrode active material, sodium carboxy methylcellulose (CMC-Na), styrene-butadiene rubber (SBR), and polyacrylic acid lithium salt were mixed at a mass ratio of 96.5:1:1.5:1, water was added, and then stirred using a mixer (T.K. HIVIS MIX, manufactured by PRIMIX Corporation) to prepare a negative electrode slurry. Next, the negative electrode slurry was applied to the surface of a copper foil so that the mass of the negative electrode mixture per 1 m² was 190 g, and the coating film was dried and then rolled to prepare a negative electrode having a negative electrode mixture layer having a density of 1.5 g/cm³ formed on both surfaces of the copper foil.

### [Positive Electrode Production]

Lithium cobaltate, acetylene black, and polyvinylidene fluoride were mixed at a mass ratio of 95:2.5:2.5, and stirred using a mixer (T.K. HIVIS MIX, manufactured by PRIMIX Corporation) after adding N-methyl-2-pyrrolidone (NMP) to prepare a positive electrode slurry. Next, the positive electrode slurry was applied to the surface of an aluminum foil, and the coating film was dried, and then rolled to prepare a positive electrode having a positive electrode mixture layer with a density of 3.6 g/cm³ formed on both surfaces of the aluminum foil.

### [Preparation of Electrolyte]

A nonaqueous electrolyte was prepared by dissolving LiPF₆ in a mixed solvent containing ethylene carbonate (EC) and diethyl carbonate (DEC) with a volume ratio of 3:7 at a concentration of 1.0 mol/L.

### [Secondary Battery Production]

A tab was attached to the electrodes, and an electrode group was produced by winding the positive electrode and the negative electrode spirally with a separator interposed so that the tabs were positioned at the outermost peripheral portion. The electrode group was inserted into an exterior body made of an aluminum laminate film, dried in vacuo at 105°C for 2 hours, and then the nonaqueous electrolyte was injected. The opening of the exterior body was sealed to obtain a secondary battery A1.

### <Example 2>

The heating temperature of the molded product was set to 800°C, and the conveyance speed was set so that the heating time was 140 seconds when the molded product was put into the device shown in FIG. 3 to obtain a sintered product.

Except for this, LSX particles were prepared in the same manner as in Example 1, and a negative electrode containing the LSX particles was produced to obtain a secondary battery A2.

### <Comparative Example 1>

After the mixture of the lithium silicate composite oxide and the raw material silicon was subjected to grinding, the ground product was baked at 600°C for 5 hours while applying a pressure to the mixture in a hot press in an inert atmosphere to obtain a sintered product of the mixture.

Thereafter, the sintered product was ground and passed through a 40 µm mesh, and then were mixed with coal pitch (MCP250, JFE Chemical Corporation), and the mixture was baked at 800° C for 5 hours in an inert gas atmosphere to cover the surfaces of the LSX particles with conductive carbon to form a conductive layer. The coating amount of the conductive layer was 5 mass% relative to the total mass of the LSX particles and the conductive layer. Afterwards, a sieve was used to obtain LSX particles (secondary particles) with an average particle size of 5 µm with a conductive layer.

Using the LSX particles described above, a negative electrode was prepared in the same manner as in Example 1 to obtain a secondary battery B1.

### <Comparative Example 2>

After the mixture of the lithium silicate composite oxide and the raw material silicon was subjected to grinding, the ground product was baked at 700°C for 2 hours while applying a pressure to the mixture in spark plasma sintering in vacuo to obtain a sintered product of the mixture.

Thereafter, the sintered product was ground and passed through a 40 µm mesh, and then were mixed with coal pitch (MCP250, JFE Chemical Corporation), and the mixture was baked at 800° C for 5 hours in an inert gas atmosphere to cover the surfaces of the LSX particles with conductive carbon to form a conductive layer. The coating amount of the conductive layer was 5 mass% relative to the total mass of the LSX particles and the conductive layer. Afterwards, a sieve was used to obtain LSX particles with an average particle size of 5 µm with a conductive layer.

Using the LSX particles described above, a negative electrode was prepared in the same manner as in Example 1 to obtain a secondary battery B2.

The batteries of Examples and Comparative Examples were evaluated as described below.

### [Charge and Discharge Cycle Test]

For each battery, charge/discharge was repeated under the following conditions.

### <Charge>

The batteries obtained above were subjected to constant current charging until the voltage reached 4.2 V at a current of 1 It (800 mA), and thereafter, subjected to constant voltage charging at a voltage of 4.2 V until the current reached 1/20 It (40 mA), in an environment of 25°C.

### <Discharge>

Constant current discharge was performed at 25°C at a current of 1 It (800 mA) until the voltage reached 2.75 V.

The pause period between charging and discharging was 10 minutes. The ratio of the discharge capacity of the 500th cycle to the discharge capacity of the 1st cycle was defined as cycle retention rate.

Table 1 shows evaluation results for the batteries A1, A2, B1, and B2. Table 1 shows the porosity, BET specific surface area, and Vickers hardness of the LSX particles used as the negative electrode active material of the respective batteries. Table 1 also shows ratio I₂/I₁ of integrated intensity I₂ of a peak derived from the lithium silicate phase to integrated intensity I₁ of a peak derived from the Si(111) plane of the silicon particles by XRD-analysis on the LSX particles.

**[Table 1]**

| Battery | LSX particles | | | | Cycle retention rate (%) |
|---|---|---|---|---|---|
| | Porosity (%) | BET specific surface area (m²/g) | Vickers hardness (HV) | Integrated intensity I₂/I₁ | |
| A1 | 0.52 | 0.71 | 877 | 0.19 | 82.0 |
| A2 | 1.69 | 0.79 | 819 | 0.3 | 80.9 |
| B1 | 2.51 | 0.96 | 781 | 0.38 | 80.5 |
| B2 | 1.33 | 0.78 | 823 | 0.41 | 80.6 |

According to Table 1, in batteries A1 and A2 in which the LSX particles having a porosity of 2% or less and I₂/I₁ of 0.3 or less were used for the negative electrode active material, a higher cycle retention rate was obtained as compared with the battery B1 using the LSX particles with the porosity of larger than 2% and I₂/I₁ of larger than 0.3 for the negative electrode active material, and the battery B2 using the LSX particles with the porosity of 2% or less but I₂/I₁ was larger than 0.3 for the negative electrode active material.

### [Industrial Applicability]

The present disclosure can provide a nonaqueous electrolyte secondary battery having a high capacity and good charge/discharge cycle characteristics. The nonaqueous electrolyte secondary battery according to the present disclosure is useful for a main power source of a mobile communication device, a portable electronic device, or the like.

### [Reference Signs List]

1 Electrode Group
2 Positive Electrode Lead
3 Negative Electrode Lead
4 Battery Case
5 Sealing Plate
6 Negative Electrode Terminal
7 Gasket
8 Sealing Plug
20 LSX particles
21 Lithium Silicate Phase
22 Silicon Particles
23 Mother particles
26 Conductive Layer
30 Manufacturing device
31 Conveyor
32 Presser
33a Upper roll
33b Lower roll
34a, 34b Heater
35 Auxiliary heater

## Claims

1. A negative electrode active material for a secondary battery comprising silicate composite particles including silicon particles and a lithium silicate phase, wherein
the silicon particles are dispersed in the lithium silicate phase,
the silicate composite particles have a porosity of 2% or less,
in a diffraction pattern by X-ray diffraction (XRD), a ratio I₂/I₁ is 0.3 or less, the ratio I₂/I₁ being a ratio of an integrated intensity I₂ of a peak derived from the lithium silicate phase that appears in a range of 2θ of 23° to 25° relative to an integrated intensity I₁ of a peak derived from Si(111) plane of the silicon particles that appears in a range of 2θ of 27° to 30°.

2. The negative electrode active material for a secondary battery of claim 1, wherein the silicate composite particles have a BET specific surface area of 0.8 m²/g or less.

3. The negative electrode active material for a secondary battery of claim 1 or 2, wherein the silicate composite particles have a Vickers hardness of 800HV or more.

4. The negative electrode active material for a secondary battery according to any one of claims 1 to 3, wherein the content of the silicon particles contained in the silicate composite particles is 30 mass% or more.

5. The negative electrode active material for a secondary battery according to any one of claims 1 to 4, wherein the lithium silicate phase includes at least one element selected from the group consisting of alkali metal elements excluding Li and Group II elements.

6. The negative electrode active material for a secondary battery according to any one of claims 1 to 5, wherein the lithium silicate phase further includes an element M, and
the element M is at least one selected from the group consisting of B, Al, Zr, Nb, Ta, La, V, Y, Ti, P, Bi, Zn, Sn, Pb, Sb, Co, Er, F, and W.

7. A secondary battery comprising a positive electrode, a negative electrode, an electrolyte, and a separator interposed between the positive electrode and the negative electrode, wherein
the negative electrode includes a current collector and a negative electrode active material layer, and
the negative electrode active material layer includes the negative electrode active material for a secondary battery according to any one of claims 1 to 6.

8. A method for producing a negative electrode active material for a secondary battery, comprising:
preparing silicate composite particles including silicon particles and a noncrystalline lithium silicate phase, wherein the silicon particles are dispersed in the lithium silicate phase,
molding a powder of the silicate composite particles,
placing the molded silicate composite particles to be in a heated state at 600°C or more and 1000°C or less, for 40 seconds or more and 200 seconds or less, and
pressing the silicate composite particles in the heated state.

9. The method for producing a negative electrode active material for a secondary battery according to claim 8, wherein the pressing the silicate composite particles is rolling the silicate composite particles in the heated state.
